# FASCICULE DE BREVET EUROPEEN

(11) **EP 3 010 807 B1**
(45) Date de publication et mention de la délivrance du brevet: **03.05.2017**
(21) Numéro de dépôt: 14733229.0
(22) Date de dépôt: 11.06.2014
(51) Int. Cl.: B64G 1/60, B64D 27/02, B64G 1/14, B64G 1/48, B64G 1/52, B64D 13/06

(54) **AÉRONEF APTE À PASSER DU DOMAINE AÉRIEN AU DOMAINE SPATIAL ET PROCÉDÉ POUR L'ADAPTATION AUTOMATIQUE DE SA CONFIGURATION**
ZUM ÜBERGANG VOM LUFTRAUM ZUM WELTRAUM FÄHIGES FLUGZEUG UND VERFAHREN ZUR AUTOMATISCHEN ANPASSUNG DER KONFIGURATION DAVON
AIRCRAFT CAPABLE OF PASSING FROM THE AERIAL DOMAIN TO THE SPATIAL DOMAIN AND METHOD FOR AUTOMATICALLY ADAPTING THE CONFIGURATION OF SAME

(30) Priorité: 18.06.2013 FR 1355742
(43) Date de publication de la demande: 27.04.2016
(73) Titulaire: Airbus Defence and Space SAS, 78130 Les Mureaux (FR)
(72) Inventeur: FERREIRA Eugénio, 31400 Toulouse (FR); CHAVAGNAC Christophe, F-75017 Paris (FR)
(74) Mandataire: Gevers & Orès
(86) Numéro de dépôt international: PCT/FR2014/000128
(87) Numéro de publication internationale: WO 2014/202842

(56) Documents cités:
- WO-A1-98/39207
- FR-A1- 2 855 061
- US-A- 4 651 728
- US-A1- 2010 044 494

## Description

La présente invention concerne un aéronef apte à passer du domaine aérien au domaine spatial, ainsi qu'un procédé pour l'adaptation automatique de la configuration de cet aéronef. Le document WO 98/39207 A1 propose un tel aéronef selon le préambule de la revendication 1. Quoique non exclusivement, cette invention est particulièrement appropriée à être mise en oeuvre pour un avion spatial, c'est-à-dire un avion qui est équipé, à la fois, de moyens de propulsion aérobie, tels que des turbomoteurs, et de moyens de propulsion anaérobie, tels qu'un moteur-fusée, et qui est capable de décoller du sol de façon usuelle pour un avion, de voler à haute altitude à une vitesse transsonique ou même supersonique, puis d'atterrir également de façon usuelle pour un avion.

On connaît déjà un aéronef pourvu d'au moins une cabine habitée et comportant :
- des moyens de propulsion aérobie fixes, tels que des turbomoteurs, pour la propulsion dans le domaine de vol aérien et des moyens de propulsion anaérobie, tels qu'un moteur-fusée, pour la propulsion dans le domaine de vol spatial, ces moyens de propulsion anaérobie étant orientables pour permettre le pilotage de l'aéronef dans ce domaine de vol spatial ;
- des surfaces aérodynamiques (volets, gouvernes,...) pour le pilotage de l'aéronef dans le domaine de vol aérien ;
- un système de commande de l'environnement (pressurisation, température,...) de la cabine habitée, alimenté à partir des moyens de propulsion aérobie;
- une réserve de gaz respirable de survie, par exemple constituée de bouteilles d'oxygène, apte uniquement à alimenter temporairement la cabine habitée en gaz respirable, sans toutefois pressuriser cette dernière, en cas de panne dudit système de commande de l'environnement à haute altitude, pour permettre à l'aéronef de rejoindre une altitude plus basse ne nécessitant pas la pressurisation de ladite cabine ;
- un système d'alimentation électrique actionné par lesdits moyens de propulsion aérobie;
- des moyens de stockage d'énergie électrique, tels que des batteries, et
- un système d'élaboration d'ordres de pilotage.

Avec un tel aéronef, le type nominal des opérations de vol peut inclure l'extinction des moyens de propulsion aérobie pendant une durée significative de la mission. Bien entendu, le confort et l'état des passagers de la cabine doivent rester inchangés, que les moyens de propulsion aérobie fonctionnent ou non.

À cette fin, selon l'invention, l'aéronef du type décrit ci-dessus comporte une réserve de gaz respirable additionnelle du type capacité haute pression, activée uniquement pendant une phase de vol où la propulsion aérobie est interrompue et apte à alimenter le système de commande de l'environnement de ladite cabine habitée en remplacement des moyens de propulsion aérobie.

Avantageusement, ladite réserve de gaz respirable additionnelle est du type bouteille de gaz sous pression.

De préférence, une telle commutation de génération d'environnement s'effectue dans le cadre d'un procédé d'adaptation automatique de la configuration de l'aéronef lorsqu'il passe du vol aérien au vol spatial.

Un tel procédé d'adaptation automatique de la configuration d'un aéronef, dont la mission le fait passer du domaine de vol aérien au domaine de vol spatial, est, selon la présente invention, remarquable par la suite des opérations suivantes :
- installation à bord dudit aéronef d'une réserve de gaz respirable additionnelle, apte à alimenter ledit système de commande de l'environnement de ladite cabine habitée ;
- détermination, préalablement à ladite mission, des conditions requises en fin de vol dans le domaine aérien pour passer dans le domaine spatial, et
- détection, pendant le vol aérien, desdites conditions et lorsque celles-ci sont réalisées :
   - alimentation du système de commande de l'environnement de la cabine par la réserve de gaz respirable additionnelle en remplacement des moyens de propulsion aérobie,
   - vérification que l'environnement de la cabine résultant de l'alimentation par la réserve de gaz respirable est correct, puis si cela est le cas,
   - alimentation du système d'alimentation électrique de l'aéronef par des moyens de stockage d'énergie électrique en remplacement des moyens de propulsion aérobie,
   - vérification que la génération électrique produite par ledit système d'alimentation électrique alimenté par lesdits moyens de stockage d'énergie électrique est correcte, puis si cela est le cas,
   - transmission des ordres de pilotage engendrés par le système d'élaboration des ordres de pilotage de l'aéronef aux moyens de propulsion anaérobie orientables en remplacement des surfaces aérodynamiques de pilotage de l'aéronef.

De préférence, pour l'alimentation du système de commande de l'environnement par la réserve de gaz respirable additionnelle, on commence par activer cette dernière, puis on bascule ledit système de commande de l'environnement des moyens de propulsion aérobie vers ladite réserve de gaz respirable additionnelle et on désactive l'alimentation à partir des moyens de propulsion aérobie.

Dans le cas où l'environnement de la cabine habitée résultant de l'alimentation par la réserve de gaz respirable additionnelle n'est pas correct, une alarme est émise.

De même, pour l'alimentation du système d'alimentation électrique par les moyens de stockage d'énergie électrique, on commence par activer ces derniers, puis on bascule ledit système d'alimentation électrique des moyens de propulsion aérobie vers lesdits moyens de stockage d'énergie électrique et on désactive l'alimentation à partir des moyens de propulsion aérobie et, dans le cas où la génération électrique produite par ledit système d'alimentation électrique alimenté par lesdits moyens de stockage d'énergie n'est pas correct, une alarme est émise.

Lors de la transmission des ordres de pilotage engendrés par ledit système d'élaboration des ordres de pilotage aux moyens de propulsion anaérobie orientables, on commence par contrôler le processus d'orientation des moyens de propulsion anaérobie, puis on bascule la transmission des ordres de pilotage à ces derniers, et on désactive la commande de pilotage par lesdites surfaces aérodynamiques. On vérifie ensuite que le pilotage par les moyens de propulsion anaérobie orientables est correct, sinon une alarme est émise.

Les figures du dessin annexé feront Les figures du dessin annexé feront bien comprendre comment l'invention peut être réalisée.

Sur ces figures, des références identiques désignent des éléments semblables.

La figure 1 montre en perspective un avion spatial auquel l'invention peut être appliquée.

La figure 2 est un schéma synoptique illustrant la présente invention. Sur ce schéma synoptique, les commutations ont été représentées par des commutateurs discrets à des fins de bonne compréhension, mais il va de soi que, dans la réalité, ces commutations sont électroniques ou informatiques.

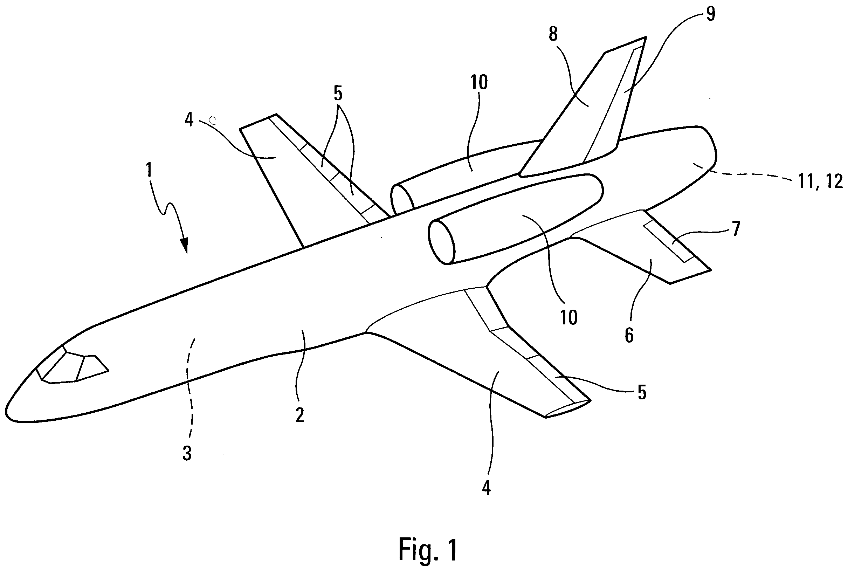

L'avion spatial 1 à étage unique représenté sur la figure 1 comporte un fuselage 2 délimitant au moins une cabine habitée 3, des ailes 4 porteuses de volets aérodynamiques 5, des empennages horizontaux 6 porteurs de volets aérodynamiques 7 et un empennage vertical 8 porteur d'une gouverne de direction 9.

Cet avion spatial 1 comporte des moyens de propulsion aérobie 10, par exemple constitués de turbomoteurs latéraux, et des moyens de propulsion anaérobie 11, par exemple constitués par un moteur-fusée 12 disposé à l'arrière du fuselage 2.

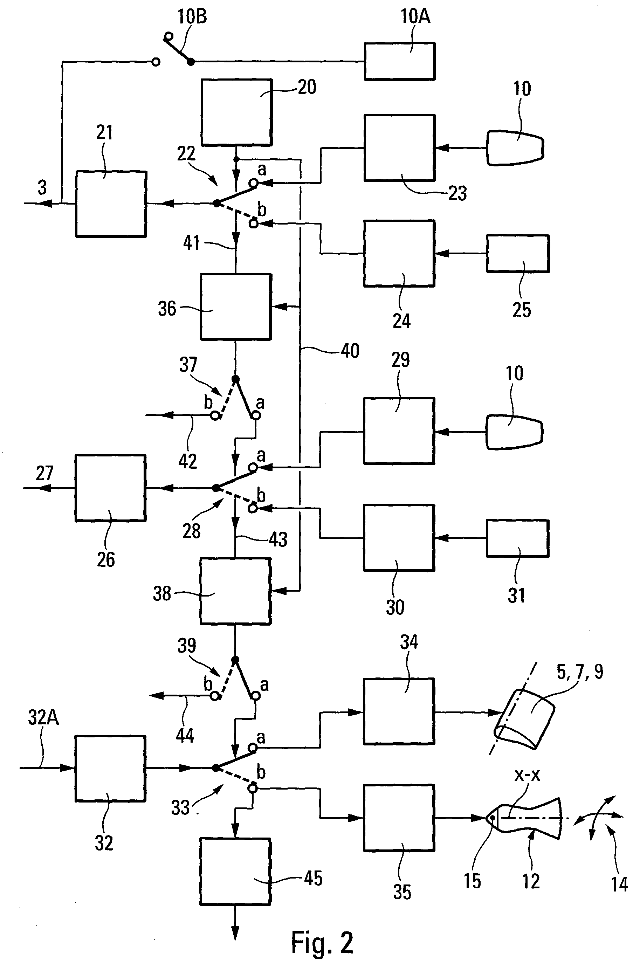

Comme cela est illustré par les flèches 14 sur la figure 2, le moteur-fusée 12 est articulé en 15 pour pouvoir être orienté autour de son axe x-x.

L'avion spatial 1 comporte de plus :
- un détecteur 20, apte à détecter un point du passage de la phase de vol aérien dudit avion spatial 1 à la phase de vol spatial défini à l'aide des informations de navigation de celui-ci, telles que conditions cinématiques en altitude, vitesse, pression extérieure, etc. ;
- un système 21 pour la commande de l'environnement à l'intérieur de la cabine 3 de l'avion spatial 1, ce système 21 pouvant être alimenté en air, par l'intermédiaire de moyens de commutation 22, soit par un dispositif de prélèvement d'air 23 sur les moyens de propulsion aérobie 10, soit par un dispositif de distribution d'air 24 alimenté par une réserve d'air 25 additionnelle constituée par exemple par des bouteilles d'air comprimé ;
- une réserve de gaz respirable de survie 10A, apte uniquement, en cas de panne audit système de commande de l'environnement 21 à haute altitude, à alimenter ladite cabine habitée 3 en gaz respirable, le temps que l'aéronef 1 rejoigne une altitude suffisamment basse à laquelle la pressurisation et le chauffage de ladite cabine ne sont plus nécessaires, la mise en service de ladite réserve de gaz respirable de survie 10A étant effectuée par une commande 10B ;
- un système 26 pour l'alimentation électrique de différents appareils 27 de l'avion spatial 1, ce système 26 étant alimenté en énergie, par l'intermédiaire de moyens de commutation 28, soit par un générateur électrique 29 entraîné par les moyens de propulsion aérobie 10, soit par un dispositif de génération électrique 30 alimenté par des batteries 31, et
- un système 32 élaborant des ordres de pilotage pour l'avion spatial 1 à partir des commandes qui sont engendrées par le pilote par action sur le manche et sur le palonnier et qui sont adressées sur l'entrée 32A dudit système 32, les ordres de pilotage de ce système 32 étant transmis, par l'intermédiaire de moyens de commutation 33, soit à un système de commande de vol aérien 34 commandant le vol de l'avion spatial 1 au moyen des volets aérodynamiques et gouvernes 5, 7, 9, soit à un système de commande de vol spatial 35 au moyen de l'orientation du moteur-fusée 12.

Par ailleurs, l'avion spatial 1 comporte :
- entre les moyens de commutation 22 et les moyens de commutation 28, un dispositif 36 pour vérifier le fonctionnement du dispositif de distribution d'air 24 alimenté par la réserve d'air 25, ce dispositif de vérification 36 étant relié aux moyens de commutation 28 par des moyens de commutation 37 ;
- entre les moyens de commutation 28 et les moyens de commutation 33, un dispositif 38 pour vérifier le fonctionnement du dispositif de génération électrique 30 alimenté par les batteries 31, ce dispositif de vérification 38 étant relié aux moyens de commutation 33 par des moyens de commutation 39 ; et
- une ligne de commande 40 entre le détecteur 20, d'une part, et le dispositif de vérification 36 du dispositif de distribution d'air 24 et le dispositif de vérification 38 du dispositif de génération électrique 30, d'autre part.

Le système de la figure 2, conforme à la présente invention, fonctionne de la façon suivante :
A. Tant que l'avion spatial 1 est en vol aérien, en-dessous du point de vol détectable par le détecteur 20, le dispositif de vérification 36 du dispositif de distribution d'air 24 et le dispositif de vérification 38 du dispositif de génération électrique 30 sont inactifs et les moyens de commutation 22, 28 et 33 sont dans leurs positions a représentées en trait plein sur la figure 2, de sorte que :
   - le système 21 de commande de l'environnement à l'intérieur de la cabine habitée 3 est alimenté par le dispositif 23 de prélèvement d'air sur les moyens de propulsion aérobie 10,
   - le système 26 d'alimentation électrique est alimenté par la génération électrique 29 entraînée par les moyens de propulsion aérobie 10 et
   - le système 32 d'élaboration des ordres de pilotage transmet ceux-ci au système de commande de vol 34 aptes à actionner les volets aérodynamiques et gouvernes 5, 7, 9.
B. Lorsque l'avion spatial 1 atteint le point de vol auquel le détecteur 20 est sensible, ce détecteur engendre un ordre faisant basculer les moyens de commutation 22 de leur position a (en trait plein) à leur position b (en tirets) de sorte que, maintenant, la source additionnelle 25 est activée, le système 21 de commande de l'environnement à l'intérieur de la cabine habitée 3 est contrôlé par le dispositif de distribution d'air 24 alimenté par cette réserve d'air additionnelle 25 et l'alimentation en air à partir des moyens de propulsion aérobie 10 est désactivée.

De plus, par la ligne 40, ledit ordre engendré par le détecteur 20 active les dispositifs de vérification 36 et 38.

Tout d'abord, par une liaison 41, le dispositif de vérification 36 vérifie que le fonctionnement de l'ensemble du dispositif de distribution d'air 24 et de la réserve d'air additionnelle 25 est correct. Si cela n'est pas le cas, il fait prendre aux moyens de commutation 37 leur position b (en tirets), et il engendre sur une ligne 42 un signal d'alarme et/ou il commande une procédure de sauvegarde.

En revanche, si le fonctionnement du dispositif de distribution d'air 24 et de la réserve d'air 25 est correct, le dispositif de vérification 36 fait prendre aux moyens de commutation 37 leur position a (en trait plein), qui commande le basculement des moyens de commutation 28 de leur position a (en trait plein) à leur position b (en tirets), après activation des batteries 31 et avant désactivation du générateur 29. Le système 26 d'alimentation électrique des différents appareils de l'avion spatial 1 se trouve donc lui-même alimenté par le dispositif de génération électrique 30 et les batteries 31.

Par une liaison 43, le dispositif de vérification 38 vérifie que le fonctionnement de l'ensemble du dispositif de génération électrique 30 et des batteries 31 est correct. Si cela n'est pas le cas, il fait prendre aux moyens de commutation 39 leur position b (en tirets) et il engendre sur une ligne 44 un signal d'alarme et/ou il commande une procédure de sauvegarde.

En revanche, si le fonctionnement du dispositif de génération électrique 30 et des batteries 31 est correct, le dispositif de vérification 38 fait prendre aux moyens de commutation 39 leur position, a (en trait plein), qui commande le basculement des moyens de commutation 33 de leur position a (en trait plein) à leur position b (en tirets). Le système 32 d'élaboration des ordres de pilotage 1 transmet donc maintenant ces derniers au système de commande de vol 35 par orientation du moteur-fusée 12. Un dispositif de vérification 45 vérifie que le pilotage de l'avion spatial 1 par le moteur-fusée 12 est correct, et il émet une alarme et/ou il commande une procédure de sauvegarde, si cela n'est pas le cas.

## Revendications

1. Aéronef (1) apte à passer du domaine de vol aérien au domaine de vol spatial, comprenant un seul étage pourvu d'au moins une cabine habitée (3) et comportant :
• des moyens de propulsion aérobie (10) et des moyens de propulsion anaérobie orientables (12) ;
• un système (21) de commande de l'environnement de la cabine alimenté à partir des moyens de propulsion aérobie (10), et
• une réserve de gaz respirable de survie (10A) apte uniquement à alimenter temporairement ladite cabine habitée (3) en gaz respirable en cas de panne dudit système (21) de commande de l'environnement de la cabine à haute altitude, l'aéronef comportant une réserve de gaz respirable additionnelle (25), activée uniquement pendant une phase de vol pendant laquelle la propulsion aérobie est interrompue,
**caractérisé en ce que** ladite réserve de gaz respirable additionnelle (25) est apte à alimenter ledit système (21) de commande de l'environnement de ladite cabine habitée en remplacement des moyens de propulsion aérobie (10).

2. Aéronef selon la revendication 1,
**caractérisé en ce que** ladite réserve de gaz respirable additionnelle (25) est formée par des bouteilles de gaz sous pression.

3. Aéronef selon au moins une des revendications 1 ou 2,
**caractérisé en ce qu'**il comporte en outre :
• un détecteur (20), apte à détecter un point du passage de la phase de vol aérien dudit avion spatial (1) à la phase de vol spatial défini à l'aide des informations de navigation de celui-ci ;
• un système (21) pour la commande de l'environnement à l'intérieur de la cabine (3) de l'avion spatial (1), ce système (21) pouvant être alimenté en air, par l'intermédiaire de moyens de commutation (22), soit par un dispositif de prélèvement d'air (23) sur les moyens de propulsion aérobie (10), soit par un dispositif de distribution d'air (24) alimenté par une réserve d'air (25) additionnelle constituée par exemple par des bouteilles d'air comprimé ;
• une réserve de gaz respirable de survie (10A), apte uniquement, en cas de panne audit système de commande de l'environnement (21) à haute altitude, à alimenter ladite cabine habitée (3) en gaz respirable, le temps que l'aéronef (1) rejoigne une altitude suffisamment basse à laquelle la pressurisation et le chauffage de ladite cabine ne sont plus nécessaires, la mise en service de ladite réserve de gaz respirable de survie (10A) étant effectuée par une commande (10B) ;
• un système (26) pour l'alimentation électrique de différents appareils (27) de l'avion spatial (1), ce système (26) étant alimenté en énergie, par l'intermédiaire de moyens de commutation (28), soit par un générateur électrique (29) entraîné par les moyens de propulsion aérobie (10), soit par un dispositif de génération électrique (30) alimenté par des batteries (31), et
• un système (32) élaborant des ordres de pilotage pour l'avion spatial (1) à partir des commandes qui sont engendrées par le pilote par action sur le manche et sur le palonnier et qui sont adressées sur l'entrée (32A) dudit système (32), les ordres de pilotage de ce système (32) étant transmis, par l'intermédiaire de moyens de commutation (33), soit à un système de commande de vol aérien (34) commandant le vol de l'avion spatial (1) au moyen des volets aérodynamiques et gouvernes (5, 7, 9), soit à un système de commande de vol spatial (35) au moyen de l'orientation du moteur-fusée (12).

4. Aéronef selon au moins une des revendications 1 à 3,
**caractérisé en ce qu'**il comporte en outre :
• entre les moyens de commutation (22) et les moyens de commutation (28), un dispositif (36) pour vérifier le fonctionnement du dispositif de distribution d'air (24) alimenté par la réserve d'air (25), ce dispositif de vérification (36) étant relié aux moyens de commutation (28) par des moyens de commutation (37) ;
• entre les moyens de commutation (28) et les moyens de commutation (33), un dispositif (38) pour vérifier le fonctionnement du dispositif de génération électrique (30) alimenté par les batteries (31), ce dispositif de vérification (38) étant relié aux moyens de commutation (33) par des moyens de commutation (39) ; et
• une ligne de commande (40) entre le détecteur (20), d'une part, et le dispositif de vérification (36) du dispositif de distribution d'air (24) et le dispositif de vérification (38) du dispositif de génération électrique (30), d'autre part.

5. Procédé pour l'adaptation automatique de la configuration d'un aéronef (1) dont la mission le fait passer du domaine de vol aérien au domaine de vol spatial, ledit aéronef comprenant un seul étage pourvu d'au moins une cabine habitée (3) et comportant :
• des moyens de propulsion aérobie (10) et des moyens de propulsion anaérobie orientables (12),
• des surfaces aérodynamiques de pilotage (5, 7, 9),
• un système (21) de commande de l'environnement de la cabine alimenté à partir des moyens de propulsion aérobie (10),
• une réserve de gaz respirable de survie (10A) apte uniquement à alimenter temporairement ladite cabine habitée (3) en gaz respirable en cas de panne dudit système (21) de commande de l'environnement de la cabine, à haute altitude,
• un système d'alimentation électrique (29) actionné par lesdits moyens de propulsion aérobie (10),
• des moyens de stockage d'énergie électrique (31), et
• un système d'élaboration d'ordres de pilotage (32),
**caractérisé par** la suite des opérations suivantes :
• installation à bord dudit aéronef d'une réserve de gaz respirable additionnelle (25), apte à alimenter ledit système (21) de commande de l'environnement de la cabine habitée,
• détermination, préalablement à ladite mission, des conditions requises en fin de vol dans le domaine aérien pour passer dans le domaine spatial, et
• détection, pendant le vol aérien, desdites conditions et lorsque celles-ci sont réalisées:
• alimentation du système (21) de commande de l'environnement de la cabine par la réserve de gaz respirable additionnelle (25) en remplacement des moyens de propulsion aérobie (10),
• vérification que l'environnement de la cabine (3) résultant de l'alimentation par la réserve de gaz respirable additionnelle est correct, puis si cela est le cas,
- alimentation du système d'alimentation électrique (29) par les moyens de stockage d'énergie électrique (31) en remplacement des moyens de propulsion aérobie (10),
- vérification que la génération électrique produite par ledit système d'alimentation électrique alimenté par lesdits moyens de stockage d'énergie électrique est correcte, puis si cela est le cas,
- transmission des ordres de pilotage engendrés par ledit système (32) d'élaboration des ordres de pilotage aux moyens de propulsion anaérobie orientables (12) en remplacement desdites surfaces aérodynamiques de pilotage.

6. Procédé selon la revendication 5,
**caractérisé en ce que**, pour l'alimentation du système de commande de l'environnement par la réserve de gaz respirable additionnelle (25), on commence par activer cette dernière, puis on bascule ledit système de commande de l'environnement des moyens de propulsion aérobie vers ladite réserve de gaz respirable additionnelle (25) et on désactive l'alimentation à partir des moyens de propulsion aérobie.

7. Procédé selon l'une des revendications 5 ou 6,
**caractérisé en ce que**, dans le cas où l'environnement de la cabine résultant de l'alimentation par la réserve de gaz respirable additionnelle (25) n'est pas correct, au moins une alarme est émise.

8. Procédé selon l'une des revendications 5 à 7,
**caractérisé en ce que**, pour l'alimentation du système d'alimentation électrique par les moyens de stockage d'énergie électrique (31), on commence par activer ces derniers, puis on bascule ledit système d'alimentation électrique des moyens de propulsion aérobie vers lesdits moyens de stockage d'énergie électrique et on désactive l'alimentation à partir des moyens de propulsion aérobie.

9. Procédé selon l'une des revendications 5 à 8,
**caractérisé en ce que**, dans le cas où la génération électrique produite par ledit système d'alimentation électrique alimenté par lesdits moyens de stockage d'énergie n'est pas correcte, au moins une alarme est émise.

10. Procédé selon l'une des revendications 5 à 8,
**caractérisé en ce que**, pour la transmission des ordres de pilotage engendrés par ledit système (32) d'élaboration des ordres de pilotage aux moyens de propulsion anaérobie orientables (12), on commence par contrôler le processus d'orientation des moyens de propulsion anaérobie, puis on bascule la transmission des ordres de pilotage à ces derniers, et on désactive la commande de pilotage par lesdites surfaces aérodynamiques.

## Patentansprüche

1. Luftfahrzeug (1), das eingerichtet ist, von dem Bereich des Luftffugs zu dem Bereich des Weltraumflugs überzugehen, wobei es eine einzige Stufe umfasst, die mit mindestens einer bemannten Kabine (3) versehen ist, und umfasst:
• aerobe Antriebsmittel (10) und ausrichtbare anaerobe Antriebsmittel (12);
• ein System (21) zur Steuerung der Umgebung der Kabine, das ausgehend von den aeroben Antriebsmittel (10) versorgt wird, und
• eine Reserve von atembaren Gas zum Überleben (10A), die eingerichtet ist, nur vorübergehend die bemannte Kabine (3) mit atembaren Gas im Falle eines Ausfalls des Systems (21) zur Steuerung der Umgebung der Kabine in großer Höhe zu versorgen,
wobei das Luftfahrzeug eine zusätzliche Reserve von atembaren Gas (25) umfasst, die nur während einer Flugphase aktiviert ist, während der der aerobe Antrieb unterbrochen wird, **dadurch gekennzeichnet, dass** die zusätzliche Reserve von atembaren Gas (25) eingerichtet ist, das System (21) zur Steuerung der Umgebung der bemannten Kabine als Ersatz der aeroben Antriebsmittel (10) zu versorgen.

2. Luftfahrzeug nach Anspruch 1, **dadurch gekennzeichnet, dass** die zusätzliche Reserve von atembaren Gas (25) durch Druckgasflaschen gebildet wird.

3. Luftfahrzeug nach wenigstens einem der Ansprüche 1 oder 2, **dadurch gekennzeichnet, dass** es ferner umfasst:
• einen Detektor (20), der eingerichtet ist, einen Punkt des Übergangs von der Phase des Luftflugs des Weltraumfahrzeugs (1) zu der Phase des Weltraumflugs zu erfassen, der mit Hilfe von Navigationsinformationen von diesem definiert ist;
• ein System (21) für die Steuerung der Umgebung im Inneren der Kabine (3) des Weltraumfahrzeugs (1), wobei zu diesem System (21) Luft mittels Kommutierungsmitteln (22) entweder durch eine Vorrichtung zur Entnahme von Luft (23) auf den aeroben Antriebsmitteln (10) oder durch eine Vorrichtung zur Verteilung von Luft (24), die von einer zusätzlichen Reserve von Luft (25) versorgt wird, die beispielsweise aus Flaschen mit komprimierter Luft besteht, zugeführt werden kann,
• eine Reserve von atembaren Gas zum Überleben (10A), die eingerichtet ist, nur im Fall eines Ausfalls des Systems zur Steuerung (21) der Umgebung in großer Höhe, die bemannten Kabine (3) mit atembaren Gases für die Zeit zu versorgen, in der das Luftfahrzeug (1) in eine ausreichend niedrige Höhe kommt, in der der Druckausgleich und das Heizen der Kabine nicht mehr notwendig sind, wobei die Inbetriebnahme der Reserve von atembaren Gas zum Überleben (10A) von einer Steuerung (10B) durchgeführt wird;
• ein System (26) für die elektrische Versorgung verschiedener Geräte (27) des Weltraumfahrzeugs (1), wobei dieses System (26) durch die Kommutierungsmittel (28) entweder durch einen elektrischen Generator (29), der durch die aeroben Antriebsmittel (10) angetrieben wird, oder durch eine elektrische Erzeugungsvorrichtung (30), die von Batterien (31) versorgt wird, mit Energie versorgt wird, und
• ein System (32) das Lenkanweisungen für das Weltraumfahrzeug (1) ausgehend von Befehlen erstellt, die von dem Piloten durch Betätigung des Steuerknüppels und Ruderpedals erzeugt werden und die an den Eingang (32A) des Systems (32) adressiert sind, wobei die Lenkanweisungen (32) mittels der Kommutierungsmittel (33) entweder an ein System zur Steuerung des Luftflugs (34), das den Weltraumflug (1) mittels aerodynamischer Klappen und Rudern (5, 7, 9) steuert, oder an ein System zur Steuerung des Weltraumflugs (35) mittels der Ausrichtung des Raketenmotors (12) übertragen werden.

4. Luftfahrzeug nach wenigstens einem der Ansprüche 1 bis 3, **dadurch gekennzeichnet, dass** es ferner umfasst:
• zwischen den Kommutierungsmitteln (22) und den Kommutierungsmitteln (28) eine Vorrichtung (36) zum Überprüfen des Betriebs der Vorrichtung zur Verteilung von Luft (24), die von der Reserve von Luft (25) versorgt wird, wobei die Vorrichtung zum Überprüfen (36) mit den Kommutierungsmitteln (28) durch die Kommutierungsmittel (37) verbunden ist;
• zwischen den Kommutierungsmitteln (28) und den Kommutierungsmitteln (33) eine Vorrichtung (38) zum Überprüfen des Betriebs der elektrischen Erzeugungsvorrichtung (30), die von Batterien (31) versorgt wird, wobei die Vorrichtung (38) zur Überprüfung mit den Kommutierungsmitteln (33) durch Kommutierungsmittel (39) verbunden ist; und
• eine Steuerleitung (40) zwischen dem Detektor (20) einerseits und der Vorrichtung zur Überprüfung (36) der Vorrichtung zur Verteilung von Luft (24) und der Vorrichtung (38) zur Überprüfung der elektrischen Erzeugungsvorrichtung (30) andererseits.

5. Verfahren zur automatischen Anpassung der Konfiguration eines Luftfahrzeugs (1), dessen Mission es von dem Bereich des Luftflugs zu dem Bereich des Weltraumflugs übergehen lässt, wobei das Luftfahrzeug eine einzige Stufe umfasst, die mit mindestens einer bemannten Kabine (3) versehen ist, und umfasst:
• aerobe Antriebsmittel (10) und ausrichtbare anaerobe Antriebsmittel (12);
• aerodynamische Lenkflächen (5, 7, 9)
• ein System (21) zur Steuerung der Umgebung der Kabine, das ausgehend von den aeroben Antriebsmitteln (10) versorgt wird, und
• eine Reserve von atembaren Gas zum Überleben (10A), die eingerichtet ist, nur vorübergehend die bemannte Kabine (3) mit atembaren Gas im Falle eines Ausfalls des Systems (21) zur Steuerung der Umgebung der Kabine in großer Höhe zu versorgen,
• ein System zur elektrischen Versorgung (29), das durch die aeroben Antriebsmittel (10) betätigt wird,
• Mittel zur Speicherung von elektrischer Energie (31) und
• ein System zur Erstellung von Lenkanweisungen (32),
**gekennzeichnet durch** die Folge der folgenden Operationen:
• Installation einer zusätzlichen Reserve von atembaren Gas (25) an Bord des Luftfahrzeugs, die eingerichtet ist, das System (21) zur Steuerung der Umgebung der der bemannten Kabine zu versorgen,
• Bestimmung der Anforderungen, die am Ende des Fluges erforderlich sind, um in den Weltraumbereich überzugehen, vor der Mission, und
• Erfassung dieser Bedingungen während des Luftflugs, und während sie durchgeführt werden:
• Versorgung des Systems (21) zur Steuerung der Umgebung der Kabine durch die zusätzliche Reserve von atembarem Gas (25) als Ersatz der aeroben Antriebsmittel (10),
• Überprüfung, dass die Umgebung (3) der Kabine, die sich **durch** die Zufuhr von der zusätzlichen Reserve von atembaren Gas ergibt, korrekt ist, und wenn dies der Fall ist,
• Versorgung des elektrischen Energieversorgungssystems (29) **durch** die Mittel zur Speicherung von elektrischer Energie (31) als Ersatz der aeroben Antriebsmittel (10),
• Überprüfung, dass die elektrische Erzeugung, die **durch** das elektrische Versorgungssystem erzeugt wird, das **durch** die Mittel zur Speicherung von elektrischer Energie versorgt wird, korrekt ist, und wenn dies der Fall ist,
• Senden von Lenkanweisungen, die **durch** das System (32) zur Erstellung von Lenkanweisungen erzeugt werden, zu den ausrichtbaren anaeroben Antriebsmitteln (12) als Ersatz der aerodynamischen Lenkflächen.

6. Verfahren nach Anspruch 5,
**dadurch gekennzeichnet, dass** für die Versorgung des Systems zur Steuerung der Umgebung durch die zusätzliche Reserve von atembaren Gas (25) begonnen wird, die letztere zu aktivieren, dann wird das System zur Steuerung der Umgebung der Kabine von den aeroben Antriebsmittel zu der zusätzlichen Reserve von atembaren Gas (25) umgeschaltet, und die Versorgung wird ausgehend von den aeroben Antriebsmitteln deaktiviert.

7. Verfahren nach einem der Ansprüche 5 oder 6,
**dadurch gekennzeichnet, dass** in dem Fall, dass die Umgebung der Kabine, die sich aus der Versorgung durch die zusätzliche Reserve von atembaren Gas (25) ergibt, nicht korrekt ist, mindestens ein Alarm ausgegeben wird.

8. Verfahren nach einem der Ansprüche 5 bis 7,
**dadurch gekennzeichnet, dass** für die Versorgung des elektrischen Versorgungssystems durch die Mittel zur Speicherung von elektrischer Energie (31) begonnen wird, die letzteren zu aktivieren, dann wird das elektrische Versorgungssystem von den aeroben Antriebsmitteln zu den Mitteln zur Speicherung von elektrischer Energie umgeschaltet, und die Versorgung wird ausgehend von den aeroben Antriebsmitteln deaktiviert.

9. Verfahren nach einem der Ansprüche 5 bis 8,
**dadurch gekennzeichnet, dass** in dem Fall, in dem die elektrische Erzeugung, die von dem elektrischen Versorgungssystem erzeugt wird, das durch die Mittel zur Speicherung von Energie versorgt wird, nicht korrekt ist, mindestens ein Alarm ausgegeben wird.

10. Verfahren nach einem der Ansprüche 5 bis 8,
**dadurch gekennzeichnet, dass** für das Senden von Lenkanweisungen, die von dem System (32) zur Erstellung von Lenkanweisungen erzeugt werden, zu den ausrichtbaren aeroben Antriebsmittteln (12) mit dem Steuern des Verfahrens der Ausrichtung der aeroben Antriebsmitteln begonnen wird, dann wird das Senden der Lenkanweisungen an die letzteren umgeschaltet, und der Lenkbefehl wird durch die aerodynamischen Flächen deaktiviert.

## Claims

1. Aircraft (1) capable of changing over from air travel to space travel, comprising a single-deck provided with at least one manned cabin (3) and comprising:
• aerobic propulsion means (10) and steerable anaerobic propulsion means (12);
• a system (21) for controlling the environment of the manned cabin, powered by the aerobic propulsion means (10), and
• a store of breathable survival gas (10A), which store is only capable of temporarily supplying said manned cabin (3) with breathable gas in the event of said system (21) for controlling the environment of the cabin malfunctioning at high altitude,
the aircraft comprising an additional store of breathable gas (25), which is activated only during a stage of flight when the aerobic propulsion is interrupted,
**characterized in that** said additional store of breathable gas (25) is capable of supplying said system (21) for controlling the environment of said manned cabin by replacing the aerobic propulsion means (10).

2. Aircraft according to claim 1,
**characterised in that** said additional store of breathable gas (25) is formed by pressurised gas cylinders.

3. Aircraft according to at least one of claims 1 or 2,
**characterised in that** it comprises, in addition:
- a detector (20) capable of detecting a change-over point from the air flight phase of said spaceplane (1) to the space flight phase, defined using navigation information thereof;
- a system (21) for controlling the environment inside the cabin (3) of the spaceplane (1), said system (21) being capable of being supplied with air by means of switching means (22), or by means of an air bleed device (23) on the aerobic propulsion means (10), or by means of an air distribution device (24) supplied by an additional store of air (25) formed for example by compressed air cylinders;
- a store of breathable survival gas (10A), which is capable, in the event of said system for controlling the environment (21) malfunctioning at high altitude, of only supplying said manned cabin (3) with breathable gas for the time the aircraft (1) takes to return to a sufficiently low altitude at which the pressurisation and heating of said cabin are no longer required, said store of breathable survival gas (10A) being put into operation by a controller (10B);
- an electrical power supply system (26) for the various apparatuses (27) of the spaceplane (1), said system (26) being supplied with power by means of switching means (28), or by means of an electrical generator (29) driven by the aerobic propulsion means (10), or by an electrical power generation device (30) powered by batteries (31), and
- a system (32) for producing piloting commands for the spaceplane (1) from orders which are created by the pilot by operating the control stick and the rudder bar and which are directed to the input (32A) of said system (32), the piloting commands of said system (32) being transmitted, by means of switching means (33), either to an air flight control system (34) controlling the flight of the spaceplane (1) by means of aerodynamic flaps and control surfaces (5, 7, 9), or to a space flight control system (35) by steering the rocket engine (12).

4. Aircraft according to at least one of claims 1 to 3,
**characterised in that** it further comprises:
- a device (36), between the switching means (22) and the switching means (28), for verifying the operation of the air distribution device (24) supplied by the store of air (25), said verification device (36) being connected to the switching means (28) by means of switching means (37);
- a device (38), between the switching means (28) and the switching means (33), for verifying the operation of the electrical power generation device (30) powered by the batteries (31), said verification device (38) being connected to the switching means (33) by means of switching means (39); and
- a control line (40) between the detector (20), at one end, and the verification device (36) of the air distribution device (24) and the verification device (38) of the electrical power generation device (30), at the other end.

5. Method for automatically adapting the configuration of an aircraft (1), the mission of which makes it change over from air flight to space flight, said aircraft comprising a single deck provided with at least one manned cabin (3) and comprising:
• aerobic propulsion means (10) and steerable anaerobic propulsion means (12),
• aerodynamic piloting surfaces (5, 7, 9),
• a system (21) for controlling the environment of the cabin, supplied by the aerobic propulsion means (10),
• a store of breathable survival gas (10A), which store is only capable of temporarily supplying said manned cabin (3) with breathable gas in the event of said system (21) for controlling the environment of the cabin malfunctioning at high altitude,
• an electrical power supply system (29) which is actuated by said aerobic propulsion means (10),
• electrical energy storage means (31), and
• a system (32) for producing piloting commands,
**characterised by** carrying out the following operations:
• installing an additional store of breathable gas (25) on-board said aircraft, which store is capable of supplying said system (21) for controlling the environment of the manned cabin,
• determining, prior to said mission, the conditions required at the end of the air flight in order to change over to the space flight, and
• detecting said conditions during the air flight, and, when they are achieved:
• supplying the system (21) for controlling the environment of the cabin by means of the additional supply of breathable gas (25) in place of the aerobic propulsion means (10),
• verifying that the environment of the cabin (3) resulting from being supplied by the additional store of breathable gas is correct and then, if this is the case,
• powering the electrical power supply system (29) via the electrical energy storage means (31) in place of the aerobic propulsion means (10),
• verifying that the electrical power produced by said electrical power supply system powered by said electrical energy storage means is correct and then, if this is the case,
• transmitting piloting commands generated by said system (32) for producing piloting commands to the steerable anaerobic propulsion means (12) in place of said aerodynamic piloting surfaces.

6. Method according to claim 5,
**characterised in that**, in order to supply the system for controlling the environment by means of the additional store of breathable gas (25), first said store is activated, then said system for controlling the environment is switched from the aerobic propulsion means to said additional store of breathable gas (25), and the supply from the aerobic propulsion means is deactivated.

7. Method according to either claim 5 or claim 6,
**characterised in that** at least one alarm is emitted in the event that the environment of the cabin resulting from being supplied by the additional store of breathable gas (25) is not correct.

8. Method according to any of claims 5 to 7,
**characterised in that**, in order to power the electrical power supply system by means of the electrical energy storage means (31), first said means are activated, then said electrical power supply system is switched from the aerobic propulsion means to said electrical energy storage means, and the power from the aerobic propulsion means is deactivated.

9. Method according to any of claims 5 to 8,
**characterised in that** at least one alarm is emitted in the event that the electrical power produced by said electrical power supply system powered by said energy storage means is not correct.

10. Method according to any of claims 5 to 8,
**characterised in that**, in order to transmit piloting commands generated by said system (32) for producing piloting commands to the steerable anaerobic propulsion means (12), first the process of steering the anaerobic propulsion means is checked, then the transmission of the piloting commands is switched to said means, and the piloting control by said aerodynamic surfaces is deactivated.
